# EUROPÄISCHE PATENTANMELDUNG

(11) **EP 2 199 766 A2**
(43) Veröffentlichungstag der Anmeldung: **23.06.2010**
(21) Anmeldenummer: 09176816.8
(22) Anmeldetag: 24.11.2009
(51) Int. Cl.: G01K 1/02, G01K 7/18, G01K 15/00

(54) **Kochgeschirr mit Temperaturmessschaltung**

(30) Priorität: 18.12.2008 DE 102008054902
(71) Anmelder: BSH Bosch und Siemens Hausgeräte GmbH, 81739 München (DE)
(72) Erfinder: Kiefer, Armin, 79104, Freiburg (DE)

(57) **Zusammenfassung**

Das Kochgeschirr ist mit einer Temperaturmessvorrichtung ausgerüstet, wobei die Temperaturmessvorrichtung eine Schaltung zur ratiometrischen Temperaturmessung aufweist. Bei dem Verfahren zum Messen einer Temperatur eines Kochgeschirrs wird eine ratiometrische Temperaturmessung durchgeführt.

## Beschreibung

Die Erfindung betrifft ein Kochgeschirr mit einer Schaltung zur Temperaturmessung.

Zur genauen Temperaturmessung von bis zu einigen 100 °C werden bisher oft Widerstandstemperatursensoren eingesetzt, z. B. die bekannten Pt100 oder Pt1000. Die Messgenauigkeit beträgt dabei typischerweise 0,1 K bei 0 °C. An die zugehörige Messelektronik werden hohe Anforderungen gestellt, damit keine wesentliche Verschlechterung der Messgenauigkeit durch die Messelektronik erfolgt. Insbesondere, wenn die Messelektronik selbst größeren Temperaturschwankungen ausgesetzt ist, werden meist teure Präzisions-Bauteile, wie Präzisionswiderstände, Präzisions-Referenz-Quellen, PräzisionsOperationsverstärker, usw. eingesetzt, die einen möglichst geringen Temperaturkoeffizienten (TK) aufweisen. Speziell bei einer elektrischen Temperaturmessung in einem Kochgeschirr, in dem die Messelektronik nur zum Teil von der Kochtemperatur thermisch isoliert werden kann, treten starke Temperaturschwankungen an der Messelektronik auf. Gleichzeitig müssen die Kosten einer solchen Temperaturmessanordnung in einem Massenprodukt im Rahmen bleiben, damit das Produkt am Markt positionierbar ist.

Aus: Kiefer, A.; Reindl, L.M., "Inductively Coupled Sensor/Actuator System for Closed-Loop Control Applications at High Temperatures and in Aggressive Environments", Sensors, 2007 IEEE, 28. bis 31. Oktober 2007, Seiten 1396 bis 1399, oder aus Kiefer, A.; Reindl, L.M. "Inductively Coupled Sensor/Actuator System for Digital Closed-Loop Control Applications at High Operating Temperatures", 2nd WSEAS Int. Conf. on CIRCUITS, SYSTEMS, SIGNAL and TELECOMMUNICATIONS (CISST'08), Acapulco, Mexiko, 25. bis 27. Januar 2008, ist eine Temperaturmessung für industrielle Anwendungen bei hoher Temperatur mittels einer ratiometrischen Messtechnik bekannt. Durch eine einfache lineare Interpolation zwischen den zwei Wandlungsergebnissen bekannter Referenzwiderstandswerte und dem Wandlungsergebnis des unbekannten Widerstandstemperatursensors wird der unbekannte Widerstand des Widerstandstemperatursensors und damit die von ihm abgefühlte Temperatur von einem Mikroprozessor errechnet.

Aus: Elektor, Heft 12, 2002, Elektor-Verlag GmbH, Aachen, Deutschland, ist ein Artikel über eine universelle Transducer-Schnittstelle der Firma Smartec bekannt, in der eine ratiometrische Messtechnik allgemein beschrieben wird.

Es ist die Aufgabe der vorliegenden Erfindung, ein Kochgeschirr mit einer besonders präzisen und dennoch preiswerten Temperaturmessvorrichtung bereitzustellen.

Diese Aufgabe wird mittels eines Kochgeschirrs mit einer Temperaturmessvorrichtung, eines Verfahrens zum Messen einer Temperatur eines Kochgeschirrs und eines Verfahrens zum Betreiben eines Kochgeschirrs nach dem jeweiligen unabhängigen Anspruch gelöst. Bevorzugte Ausführungsformen sind insbesondere den abhängigen Ansprüchen entnehmbar.

Das Kochgeschirr weist als Temperaturmessvorrichtung eine Schaltung zur ratiometrischen Temperaturmessung auf. Unter einem Kochgeschirr werden hier alle Gefäße verstanden, die zur Zubereitung warmer Speisen dienen, also insbesondere auch Kochtöpfe und Bratpfannen.

Bei der Schaltung zur ratiometrischen Temperaturmessung befindet sich typischerweise am Eingang des Messzweiges ein Multiplexer, über den zwei interne Kalibrierwiderstände und mehrere zu messende externe Widerstandstemperatursensoren nacheinander an den Messzweig geschaltet werden. Vor jeder Temperatur-Messung werden üblicherweise zunächst die beiden bekannten Kalibrierwiderstände gemessen und danach der zu bestimmende Widerstandstemperatursensor oder nacheinander die zu bestimmenden Widerstandstemperatursensoren. Bei der Messung wird jeweils der ohmsche Widerstand der Widerstände gemessen, oder es wird jeweils eine Größe gemessen, die sich proportional zum ohmschen Widerstand verhält. Üblicherweise wird ein Messstrom eingeprägt und der Spannungsabfall an dem zugeschalteten Widerstand gemessen. Die beiden Kalibrierwiderstände werden üblicherweise so gewählt, dass der eine Kalibrierwiderstand in der Nähe des Minimalwertes des Messbereiches liegt und der andere Kalibrierwiderstand in der Nähe des Maximalwertes des Messbereiches. Durch die beiden vorgegebenen Kalibrierwiderstandswerte und die zugehörigen realen Messwerte ist eine Gerade definiert, entlang welcher interpoliert und / oder extrapoliert werden kann. Durch eine lineare Interpolation oder Extrapolation (im Folgenden nur noch mit Approximation bezeichnet) auf dieser Geraden wird aus dem Messwert des Widerstandstemperaturfühlers sein ohmscher Widerstand und damit die abgefühlte Temperatur errechnet. Die Breite des maximalen Messbereichs ist durch eine Einstellung der Auswerteelektronik wählbar.

Die Verwendung einer solchen Schaltung in Kochgeschirr weist gegenüber den bisher in Kochgeschirr verwendeten Temperaturmessvorrichtungen unter anderem den Vorteil auf, dass der gesamte Messzweig Temperaturdriften aufweisen darf, so dass zur hohen Genauigkeit der Temperaturmessung vergleichsweise preisgünstige Standard-Bauteile verwendet werden können. Es werden keine analogen Präzisionsschaltkreise, Präzisionsquellen oder Präzisionsoperationsverstärker benötigt, vielmehr werden nur Kalibrierwiderstände als Präzisionsbauteile benötigt, von denen die Genauigkeit der Messung direkt abhängt. Mittels der Präzisionskalibrierwiderstände wird das Messergebnis von resistiven Temperatursensoren direkt in Ohm ermittelt. Erst der weitgehende Verzicht auf Präzisionsbauteile ermöglicht eine Präzisionsmesselektronik für hohe Betriebstemperaturen und damit eine schnell reagierende Temperaturregelung. So sind insbesondere eine schnellstmögliche Aufheizung auf eine gewünschte Gartemperatur und eine exakte Konstanthaltung der Gartemperatur während des Garens möglich. Zudem spielt die Höhe des Messstromes keine Rolle, so dass ein Initialwert und ein Temperaturkoeffizient vernachlässigbar sind, d. h., dass keine Kosten verursachende Referenzquelle benötigt wird. Die ratiometrische Temperaturmessung ist ferner selbstkalibrierend.

Bei einer Temperaturregelung im Kochgeschirr zum Kochen mit Wasser ist in der Praxis vor allem eine bis auf wenige Grad genaue Temperaturmessung im Bereich des Siedepunktes von Wasser notwendig. Ist die Temperatur des Wassers zu niedrig, siedet es nicht richtig, woraufhin der Anwender unzufrieden wird und evtl. lieber manuell wie bisher bekannt eine feste Kochstufe einstellt. Wird jedoch versucht mittels der Regelung die Temperatur des Wassers ungewollt über den Siedepunkt einzuregeln, wird die volle Heizleistung angefordert und das Wasser kocht über, obwohl keine Temperaturerhöhung mehr erreicht werden kann, da der Siedepunkt schon erreicht ist. Deshalb muss der Kochpunkt besonders genau gemessen werden. Jedoch ist es bei der ratiometrischen Temperaturmessung nachteilig, dass zur Erreichung einer hohen Genauigkeit sehr genaue und damit vergleichsweise teure Kalibrierwiderstände benötigt werden.

Üblicherweise werden die Kalibrierwiderstände so gewählt, dass sie in der Nähe des Minimalwertes des Messbereiches (hier: 0 °C) und in der Nähe des Maximalwertes des Messbereiches (hier: 250°C bis 350 °C) liegen, um eine möglichst gleichmäßige Genauigkeit über den gesamten Messbereich zu erzielen. Zur weiteren Kostenverringerung bei zugleich hochgenauer Temperaturmessung im Bereich des Siedepunkts von Wasser wird daher ein Kochgeschirr, insbesondere Kochtopf, bevorzugt, bei dem die Schaltung zur ratiometrischen Temperaturmessung mindestens einen ersten Kalibrierwiderstand aufweist, dessen Kalibriertemperatur im Temperaturbereich zwischen 80 °C und 120 °C liegt. Um die so gewählte Kalibriertemperatur herum wird eine besonders hohe Messgenauigkeit bei Abgleich mit dem Widerstandstemperatursensor erreicht.

Es ist besonders bevorzugt, wenn der Kalibrierwiderstand so ausgelegt ist, dass eine Kalibrierung in der Nähe (+/- 10 °C) des Siedepunktes von Wasser erfolgt, da hier die höchste Genauigkeit gefordert ist.

Zur Ermöglichung einer besonders praxisnahen und bedienerfreundlichen Temperaturregelung wird ein erster Kaliberwiderstand bevorzugt, dessen Kalibriertemperatur unterhalb der Siedetemperatur von Wasser liegt, insbesondere Bereich zwischen 90 °C und 99 °C. Unter einer Kalibriertemperatur wird ein Wert des Kalibrierwiderstands verstanden, welcher einer Temperatur eines äquivalenten Widerstandstemperatursensors bei gleichem Widerstandswert entspricht. Dies berücksichtigt die Tatsache, dass häufig heißes Wasser knapp unter der Siedetemperatur verwendet wird. z. B. bei 95 °C als Sollwert zum Kochen von Nudeln. Auch wird so ein Überkochen besonders wirksam verhindert. Bei Auswahl von Widerstandswerten für den ersten Kalibrierwiderstand aus den sogenannten E-Reihen, z. B. gemäß DIN IEC 60063, wählt man vorzugsweise einen Normwiderstandswert, welcher einer Kalibriertemperatur entspricht, die dem Siedepunkt von unten am nächsten liegt, z. B. 95,682 °C.

Es ist zum Erreichen eines breiten Messbereichs und einer ausreichend hohen Messgenauigkeit auch zum Braten oder Frittieren bei Temperaturen bis zu 300 °C vorteilhaft, wenn eine Kalibriertemperatur mindestens eines zweiten Kalibrierwiderstands im Bereich zwischen 150 °C und 300 °C, insbesondere zwischen 180 °C und 250 °C, liegt. Über 300 °C wird normalerweise nicht gegart, jedoch sollten kurzzeitige Überschwinger nicht zur Schädigung der Hardware führen.

Der Messbereich für ein Kochgeschirr liegt vorzugsweise im Bereich von Raumtemperatur bis max. ca. 300 °C. Es kann aber auch bevorzugt sein, wenn eine untere Grenze des Messbereichs bis ca. - 20 °C reicht, um etwa ein Auftauprogramm für Gefriergut zu fahren.

Es wird ein Kochgeschirr bevorzugt, bei dem der zweite Kalibrierwiderstand im oberen Teil des Messbereiches in der Toleranz und / oder im Temperaturkoeffizienten ungenauer ist als der erste Kalibrierwiderstand. Eine größere Ungenauigkeit beim Braten oder Frittieren wird dabei in Kauf genommen, da die Praxis gezeigt hat, dass bei diesen Gararten keine hohe Temperaturgenauigkeit erforderlich ist. Dadurch werden weitere Kosten gespart; so kann beispielsweise die Elektronik preisgünstiger ausgestaltet sein, auch braucht ggf. nur der erste Kalibrierwiderstand im Bereich der Siedetemperatur von Wasser ein Präzisionswiderstand zu sein. Die Genauigkeit im Bereich des ersten Kalibrierwiderstands wird hingegen nur geringfügig beeinflusst.

Durch Verwendung von mehr als zwei Kalibrierwiderständen kann die Approximation (Interpolation und / oder Extrapolation) zumindest bereichsweise verfeinert werden, oder es können mehrere Messbereiche realisiert werden. Bei einem Kochgeschirr kann beispielsweise eine Feinmessung im Bereich von 100 °C zur Bestimmung des Siedepunktes von Wasser in einem eigenen, sehr genauen Messbereich durchgeführt werden. Es ist zur nutzerfreundlichen Temperaturmessung insbesondere vorteilhaft, mindestens einen weiteren Messbereich zu realisieren, der um den Siedepunkt von Wasser herum besonders genau und mit höherer Auflösung misst. Durch die genaue Messung im Bereich des Siedepunkts kann insbesondere die Temperatur zuverlässig knapp unterhalb des Siedepunktes eingeregelt werden. Dieser Messbereich reicht vorzugsweise von 80 °C bis 120 °C. Die Kalibriertemperaturen der zugehörigen Kalibrierwiderstände liegen dann bevorzugt bei zwischen 80°C und 90 °C für den unteren Kalibrierwiderstand und zwischen 110 °C und 120°C für den oberen Kalibrierwiderstand. Es wird somit insbesondere ein Kochgeschirr bevorzugt, bei dem die Schaltung mindestens zwei Messbereiche aufweist, wobei einer der Messbereiche zwischen 80 °C und 120 °C liegt.

Es wird zur kostengünstigen Implementierung insbesondere ein Kochgeschirr bevorzugt, bei dem die Schaltung zur Ausmessung von zwei Messbereichen drei Kalibrierwiderstände verwendet.

Eine Messung bei mehreren Messbereichen wird vorzugsweise so vorgenommen, dass zunächst im großen Messbereich gemessen wird. Falls festgestellt wird, dass der Messwert innerhalb des feineren Messbereiches liegt, wird eine zweite Messung im feineren Messbereich durchgeführt. Bei der Datenübertragung an eine Regelungseinheit braucht nur jeweils ein Messwert übermittelt zu werden. Falls der Messwert des feineren Messbereiches vorliegt, wird dieser übermittelt.

Die ratiometrische Messmethode verwendet am Eingang einen oder mehrere Multiplexer oder Demultiplexer (im Folgenden vereinfachend nur noch Multiplexer genannt), um zwischen den Kalibrierwiderständen und den Temperatursensoren zyklisch umzuschalten. Deshalb können mit dieser Methode preisgünstig mehrere Messstellen an einem Kochgeschirr abgefühlt werden. Der Multiplexer braucht lediglich um entsprechende Kanäle erweitert zu werden. Dadurch ist vorzugsweise mit einer Anordnung mehrerer, räumlich verteilter Widerstandstemperatursensoren sogar eine Messung der Temperaturverteilung in einem Kochgeschirr möglich. Es kann insbesondere ein Kochgeschirr bevorzugt sein, bei dem die Widerstandstemperatursensoren von der Bodenmitte aus gesehen nach Außen gestaffelt angeordnet sind. Dadurch kann eine Temperatur im Querschnitt an verschiedenen Stellen gemessen werden, z. B. in der Mitte des Topfbodens, zwischen Mitte und Rand des Topfbodens, am Rand des Topfbodens und ggf. auch seitlich am Topf in verschiedenen Höhenabständen zum Topfboden. Es kann zusätzlich oder alternativ bevorzugt sein, wenn die Widerstandstemperatursensoren winkelsektorförmig angeordnet sind. Dies mag insbesondere bei Pfannen gewünscht sein, um eine unterschiedliche Verteilung des Gargutes zu erfassen, z. B. gefrorene Fischstäbchen nur auf einer Seite der Pfanne.

Bei dem Verfahren zum Messen einer Temperatur eines Kochgeschirrs wird eine ratiometrische Temperaturmessung durchgeführt.

Vorteilhafterweise kann zur Durchführung der ratiometrischen Temperaturmessung eine ohmsche Temperaturmessung mit Widerstandstemperatursensoren und ohmschen Kalibrierwiderständen durchgeführt werden.

Auch kann in mehreren Messbereichen mit unterschiedlicher Genauigkeit und / oder mit unterschiedlicher Auflösung gemessen werden. Dadurch kann eine hohe Messgenauigkeit in praxisrelevanten Temperaturbereichen bei gleichzeitig vergleichsweise geringen Kosten erreicht werden.

Das Verfahren zum Betreiben eines Kochgeschirrs verwendet die ratiometrische Temperaturmessung, wobei eine Temperaturregelung auf der Grundlage der ratiometrischen Temperaturmessung durchgeführt wird. Die Temperaturregelung kann am Kochgeschirr oder an einem das Kochgeschirr betreibenden Betriebsgerät durchgeführt werden.

Um eine Luftdruckabhängigkeit des Siedepunkts des Wassers berücksichtigen zu können, also die Abhängigkeit von der Höhenlage des Ortes über dem Meeresspiegel und den barometrischen Luftdruckschwankungen, kann die Temperaturregelung vorteilhafterweise an einen Umgebungsluftdruck anpassbar sein. Dabei kann eine Kalibrierung über den Kalibrierwiderstand unverändert bleiben, nur ein Regelungssollwert wird dann druckabhängig variiert. Ein zur Korrektur (z. B. Absenkung) des Regelungssollwertes für kochendes Wasser verwendbarer Luftdrucksensor, insbesondere Absolutdrucksensor, kann am Kochgeschirr oder am Betriebsgerät vorhanden sein. Alternativ kann der Luftdruck auch manuell voreingestellt werden, z. B. am Betriebsgerät von einem Servicetechniker oder einem Bediener, beispielsweise bei Anschluss des Betriebsgeräts.

In den folgenden Figuren wird die Erfindung anhand von Ausführungsbeispielen schematisch genauer beschrieben. Dabei können zur besseren Übersichtlichkeit gleiche oder gleichwirkende Elemente mit gleichen Bezugszeichen versehen sein.
- FIG 1A: zeigt eine Schaltung zur ratiometrischen Temperaturmessung nach dem Stand der Technik;
- FIG 1 B: zeigt eine Auftragung von mittels der Schaltung aus FIG 1A ermittelten Widerstandswerten in Ohm gegen einen zugehörigen digitalen Wert an einem Ausgang eines Analog/Digital-Wandlers der Schaltung;
- FIG 2A: zeigt eine Schaltung zur ratiometrischen Temperaturmessung gemäß einem weiteren Ausführungsbeispiel;
- FIG 2B: zeigt eine Auftragung von mittels der Schaltung aus FIG 2A ermittelten Widerstandswerten in Ohm gegen einen zugehörigen digitalen Wert an einem Ausgang eines Analog/Digital-Wandlers der Schaltung aus FIG 2A unter Berücksichtigung eines Toleranzbereichs der Referenzwiderstände.
- FIG 3A: zeigt eine Schaltung zur ratiometrischen Temperaturmessung gemäß noch einem weiteren Ausführungsbeispiel;
- FIG 3B: zeigt eine Auftragung von mittels der Schaltung aus FIG 3A ermittelten Widerstandswerten in Ohm gegen einen zugehörigen digitalen Wert an einem Ausgang eines Analog/Digital-Wandlers der Schaltung;
- FIG 4: zeigt als Schnittdarstellung in Seitenansicht einen Kochtopf mit Komponenten einer Schaltung zur ratiometrischen Temperaturmessung gemäß einer weiteren Ausführungsform;
- FIG 5: zeigt in Aufsicht eine Skizze einer Bratpfanne mit Komponenten einer Schaltung zur ratiometrischen Temperaturmessung gemäß noch einer weiteren Ausführungsform.

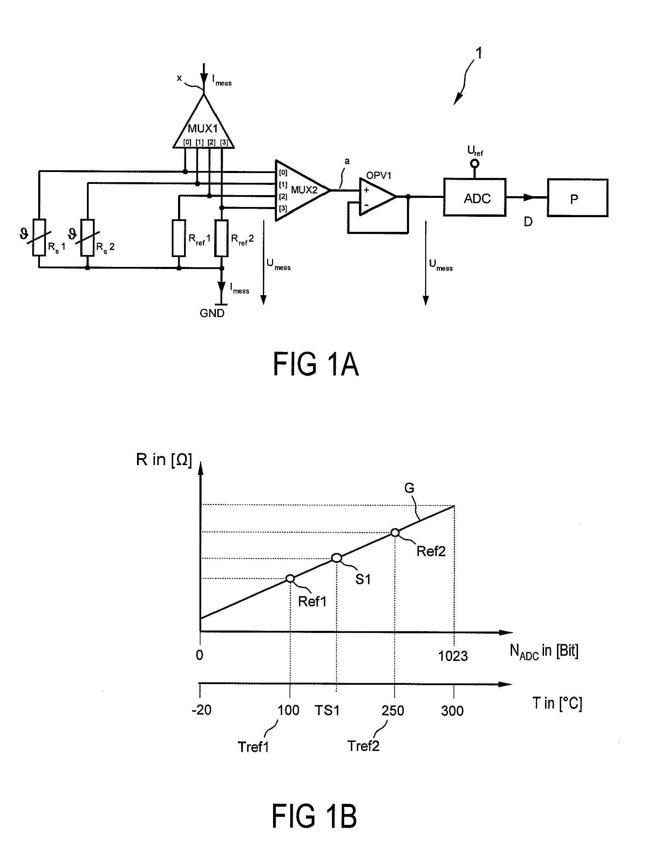

FIG 1A zeigt dazu eine Schaltung 1 zur ratiometrischen Temperaturmessung nach dem Stand der Technik zur erfindungsgemäßen Verwendung in Kochgeschirr. Am Eingang der Messschaltung 1 befindet sich ein erster Multiplexer MUX1 mit einem Eingangskanal x und vier Multiplexer-Ausgangskanälen [0] bis [3]. An die zwei Multiplexerkanäle [0] und [1] ist jeweils ein Widerstandstemperatursensor Rₛ1 bzw. Rₛ2 vom Typ Pt100 angeschlossen; an die beiden Multiplexerkanäle [2] und [3] ist jeweils ein Kalibrierwiderstand R_{ref}1 bzw. R_{ref}2 angeschlossen. Die Widerstände Rₛ1, Rₛ2, R_{ref}1, R_{ref}2 sind weiter an Masse GND angeschlossen. Die Eingangsseiten der Widerstände Rₛ1, Rₛ2, R_{ref}1, R_{ref}2 und damit die Ausgänge [0 ... 3] des ersten Multiplexers MUX1 sind mit einem zweiten Multiplexer MUX2 verbunden, der ebenfalls vier Multiplexerkanäle [0] bis [3] besitzt. Der erste Multiplexer MUX1 und der zweite Multiplexer MUX 2 arbeiten synchron, d. h., dass immer zugeordnete Multiplexerkanäle [0 ... 3] aktiv sind. Dem Ausgang a des zweiten Multiplexers MUX2 ist ein Impedanzwandler in Form eines Operationsverstärkers OPV1 nachgeschaltet, dessen Ausgang mit seinem invertierenden Eingang verbunden ist. Dem Operationsverstärker OPV1 ist wiederum ein Analog/Digital-Umsetzer ADC nachgeschaltet, welcher das analoge Ausgangssignal des Operationsverstärkers OPV1 in einen größenlosen Digitalwert N_{ADC} umgesetzt (quantisiert). Dazu wird der Analog/Digital-Umsetzer ADC hier mit einem feststehenden Bezugswert in Form einer - auch ungenauen - Referenzspannung U_{ref} gespeist. Die Referenzspannung U_{ref} legt die maximale Amplitude des Eingangssignals am Analog/Digital-Umsetzer ADC fest. Die digitalen Daten D mit ihrem jeweiligen Digitalwert N_{ADC} werden zur Weiterverarbeitung einem nachgeschalteten Prozessor P geliefert. Dieser Prozessor P führt dann eine lineare Approximation durch, um den ohmschen Widerstand der Temperaturfühler Rₛ1, Rₛ2 und daraus die jeweils abgefühlte Temperatur zu ermitteln.

Für eine Messung wird ein bekannter Messstrom Iₘₑₛₛ über den ersten Multiplexer MUX1 nacheinander in die Widerstandstemperatursensoren Rₛ1, Rₛ2, und die zwei Kalibrierwiderstände R_{ref}1, R_{ref}2 geschaltet, jedoch nicht notwendigerweise in dieser Reihenfolge. Die an dem vom Messstrom Iₘₑₛₛ durchflossenen Widerstand Rₛ1, Rₛ2, R_{ref}1 bzw. R_{ref}2 jeweils abfallende Spannung Uₘₑₛₛ wird von dem zweiten Multiplexer MUX2 abgenommen und dem als Impedanzwandler arbeitenden Operationsverstärkers OPV1 zugeführt. Der Operationsverstärkers OPV1 misst Uₘₑₛₛ hochohmig, so dass der Messstrom Iₘₑₛₛ nicht beeinflusst wird. Am Ausgang des Operationsverstärkers OPV1 wird Uₘₑₛₛ niederohmig zur Verfügung gestellt. Die Spannung Uₘₑₛₛ wird vom Analog/Digital-Umsetzer ADC in einen entsprechenden digitalen Wert N_{ADC} umgesetzt und an den Prozessor P weitergeleitet.

FIG 1 B zeigt die Arbeitsweise der linearen Approximation im Prozessor P aus FIG 1A anhand einer Auftragung von ermittelten Widerstandswerten in Ohm gegen einen zugehörigen eingegangenen digitalen Messwert N_{ADC} in [bit]. Der Prozessor P erhält zunächst einen digitalen Messwert N_{ADC} und besitzt die Information, welchem Widerstand Rₛ1, Rₛ2, R_{ref}1, R_{ref}2 dieser digitale Messwert N_{ADC} zugeordnet ist. Vorzugsweise werden zuerst die zwei Kalibrierwiderstände R_{ref}1, R_{ref}2 abgefühlt. Dann kann dem aktuellen digitalen Messwert N_{ADC} der bekannte Widerstandswert des Kalibrierwiderstands R_{ref}1 oder R_{ref}2 zugeordnet werden. Dadurch ergeben sich im Diagramm für die Kalibrierwiderstände R_{ref}1, R_{ref}2 die Referenzpunkte Ref1 und Ref2 als (N_{ADC}; R_{ref})-Paare, welche eine zugehörige Approximationsgerade G definieren. Eine folgende Messung eines Widerstandstemperatursensors Rₛ1 oder Rₛ2 ergibt wiederum einen digitalen Messwert N_{ADC}, welcher durch den Prozessor P auf die Approximationsgerade abgebildet wird und durch lineare Approximation den zugehörigen Widerstandswert berechnet. Es ergibt sich somit ein Messpunkt S1 als (N_{ADC}; Rₛ)-Paar auf der Approximationsgeraden G. Aus dem so interpolierten Widerstandswert wird mittels einer bekannten genormten, meist nichtlinearen, Widerstands/Temperatur-Kennlinie die am Widerstandstemperatursensor Rₛ1 oder Rₛ2 anliegende Temperatur TS1 bzw. TS2 (nicht gezeigt) bestimmt, z. B. über eine Nachschlagetabelle, in der die Kennlinie abgelegt ist. Insgesamt kann dadurch, wie durch die Temperaturachse gezeigt, jedem digitalen Messwert N_{ADC} ein Temperaturwert T zugeordnet werden. So kann auch den Kalibrierwiderständen R_{ref}1 und R_{ref}2 eine jeweilige Kalibriertemperatur Tref1 bzw. Tref2 zugeordnet werden.

Während eines Messzyklus', der nur einige Millisekunden dauert, kann der gesamte Messzweig als konstant angesehen werden, d. h., dass alle Messungen der Kalibrierwiderstände R_{ref}1, R_{ref}2 und Temperatursensor(en) Rₛ1, Rₛ2 unter physikalisch gleichen Randbedingungen (driftlos) gemessen werden, da sich dieser durch Temperatureinflüsse nicht so schnell verändern wird. Dadurch werden alle Temperaturdriften eliminiert. Über längere Zeiträume driftet die Schaltung 1, d. h., es werden andere Daten vom Analog/Digital-Umsetzer ADC geliefert; jedoch wird nach der Approximation wieder der richtige Widerstandswert der Temperatursensoren Rₛ1 oder Rₛ2 ermittelt. Somit ergibt sich ein sehr geringer Temperaturkoeffizient, d. h., eine sehr geringe relative Änderung in Abhängigkeit von der Änderung der Temperatur gegenüber einer Bezugstemperatur, der Messelektronik 1 durch ratiometrische Selbstkalibrierung vor jeder Einzelmessung. Weitere Vorteile der ratiometrischen Temperaturmessung sind:
- die Höhe des Messstromes Iₘₑₛₛ spielt keine Rolle, so dass der Initialwert und der Temperaturkoeffizient vernachlässigbar sind. Folglich wird keine Referenzquelle für den Messstrom Iₘₑₛₛ benötigt, die Kosten verursacht.
- die On-Widerstände der Multiplexer spielen keine Rolle für den Initialwert und den Temperaturkoeffizient. Die Messspannung Uₘₑₛₛ wird beispielsweise von dem zweiten Multiplexer MUX2 direkt an den Messwiderständen angegriffen, so dass die On-Widerstände des Eingangsmultiplexers MUX1 keine Rolle spielen. Da die Messspannung Uₘₑₛₛ hochohmig durch den Impedanzwandler OPV1 abgegriffen wird, fließt praktisch kein Strom durch die On-Widerstände des zweiten Multiplexers MUX 2, so dass kein nennenswerter Spannungsabfall an ihnen erfolgen.
- sogar Leckströme (in Absolutwert und Temperaturkoeffizient) der Multiplexerkanäle [0 ... 3] der Multiplexer MUX1, MUX2 gegen Masse GND oder eine Versorgungsspannung Vcc (nicht eingezeichnet) heben sich auf, wenn sie bei allen Kanälen gleich sind. Nur differentielle Unterschiede in den Leckströmen verfälschen das Messergebnis.
- der als Impedanzwandler dienende Operationsverstärker OPV1 muss kein Präzisionsschaltkreis mit geringem Offsetfehler und geringer Offset-Drift sein, da der Offsetfehler durch die ratiometrische Messung eliminiert wird. Auch ein Eingangsstrom des Operationsverstärkers OPV 1 beeinflusst den Messstrom Iₘₑₛₛ bei allen Kanälen gleich und eliminiert sich. Lediglich ein unterschiedlicher Spannungsabfall an eventuell unterschiedlichen On-Widerständen des zweiten Multiplexers MUX2 führt zu einem Messfehler. Der Eingangsstrom ist jedoch niedrig und die On-Widerstände naturgemäß sehr gering, so dass der Fehler äußerst gering bleibt.
- Nullpunkt- und Verstärkungs-Fehler sowie eine Temperaturdrift des A/D-Umsetzers ADC werden ebenfalls eliminiert.
- auch die Referenzspannung des A/D-Umsetzers ADC spielt bei einer Betrachtung des Absolutwerts und des Temperaturkoeffizienten keine Rolle, so dass auch hier keine Präzisionsquelle erforderlich ist.
- es sind nur zwei Präzisionsbauteile in der kompletten Messelektronik notwendig, nämlich die Kalibrierwiderstände R_{ref}1 und R_{ref}2. Heutzutage sind Präzisionswiderstände sogar als sehr kleine SMD-Bauteile erhältlich, z. B. mit 0,1 % Toleranz und einem Temperaturkoeffizienten von nur 10 ppm/K und sehr guter Langzeitstabilität. Die Genauigkeit der Messung hängt direkt von diesen beiden Referenzwiderständen R_{ref}1, R_{ref}2ab.
- die Schaltung benötigt keinerlei Abgleich.
- die ratiometrische Messung ist selbstkalibrierend. Durch die beiden PräzisionsKalibrierwiderstände R_{ref}1 und R_{ref}2 wird das Messergebnis von resistiven Temperatursensoren (z.B. Pt100) direkt in Ohm ermittelt.

Grundvoraussetzung des ratiometrischen Messverfahrens ist die Linearität des kompletten Messzweiges, einschließlich Multiplexer MUX1, MUX2, Impedanzwandler OPV1 und A/D-Umsetzer ADC. Multiplexer MUX1, MUX2 und Impedanzwandler OPV1 sind üblicherweise extrem linear. Lediglich der A/D-Umsetzer ADC weist eine zwar geringfügige, aber im Datenblatt spezifizierte Nichtlinearität auf, die zusätzlich auch einen Temperaturkoeffizienten besitzt. Der maximale Linearitätsfehler des ADC muss der gewünschten Gesamtgenauigkeit des Messsystems entsprechen.

Die Leckstromunterschiede der einzelnen Multiplexer-Kanäle [0] bis [3] gegen Masse GND und Versorgungsspannung Vcc sowie zu den Nachbarkanälen führen zu Fehlern, ebenso deren Unterschiede im Temperaturkoeffizienten. Leckströme, die in allen Kanälen [0] bis [3] in gleicher Weise vorhanden sind, werden jedoch eliminiert. Die zwei Kalibrierwiderstände R_{ref}1, R_{ref}2 müssen in ihrem Absolutwert genau sein. Unterschiedliche Temperaturkoeffizienten der Kalibrierwiderstände R_{ref}1, R_{ref}2 als auch eine unterschiedliche Langzeitdrift (Alterung) wirken sich direkt als Messfehler aus.

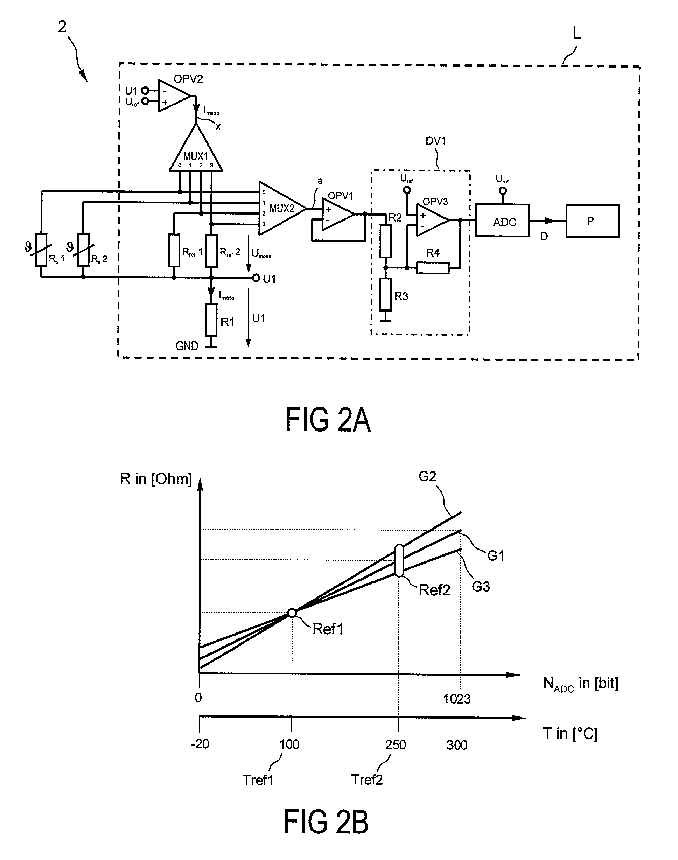

FIG 2A zeigt eine Schaltung 2 zur ratiometrischen Temperaturmessung gemäß einem weiteren Ausführungsbeispiel. Im Gegensatz zum Ausführungsbeispiel nach FIG 1A ist der Eingang x des ersten Multiplexers MUX1 mit einem Ausgang eines Operationsverstärkers OPV2 zusammengeschaltet, an dessen nichtinvertierendem Eingang die Referenzspannung U_{ref} angelegt wird und an dessen invertierendem Eingang eine weitere Spannung U₁. Die Kalibrierwiderstände R_{ref}1, R_{ref}2 und die Temperatursensoren Rₛ1, Rₛ2 liegen nicht auf Masse, sondern auf der Spannung U₁. Den Kalibrierwiderständen R_{ref}1, R_{ref}2 und den Temperatursensor(en) Rₛ1, Rₛ2 ist ferner ein Widerstand R1 in Reihe nachgeschaltet, der erst auf Masse GND liegt und als Strommesswiderstand dient. Der Messstrom Iₘₑₛₛ wird über den Spannungsabfall U1 an R1 gemessen, da U₁ an den invertierenden Eingang des OPV2 angeschlossen ist. OPV2 arbeitet als Regler, indem er die Ist-Spannung U₁ mit der Soll-Spannung U_{ref} vergleicht und seine Ausgangsspannung solange erhöht, bis ein genügend hoher Messstrom Iₘₑₛₛ fließt. Die Ausgangsspannung des Operationsverstärkers OPV2 stellt sich durch diesen Regelungsvorgang so ein, dass der Messstrom Iₘₑₛₛ so groß wird, dass der Spannungsabfall U1 an R1 gleich U_{ref} wird. Somit kann durch Wahl von R1 die Stärke des Messstroms Iₘₑₛₛ festgelegt werden. Der zweite Multiplexer MUX2 fühlt daher Uₘₑₛₛ + U1 = Uₘₑₛₛ + U_{ref} ab, welche Spannung auch an seinem Ausgang a anliegt. Deshalb muss U_{ref} wieder subtrahiert werden. Dies erfolgt durch einen Differenzverstärker DV1, welcher einen Operationsverstärker OPV3 und Widerstände R2, R3, R4 zu seiner Einstellung nutzt. Der Differenzverstärker DV1 ist dem als Impedanzwandler dienenden Operationsverstärker OPV1 nachgeschaltet, welcher die Messspannung Uₘₑₛₛ + U1 niederohmig zur Verfügung stellt. Durch das Verhältnis von Widerstand R4 zu Widerstand R2 wird der Messbereich an den Eingangsspannungsbereich des A/D-Umsetzers ADC angepasst, und durch das Verhältnis von Widerstand R4 zu Widerstand R3 wird der konstante Einfluss von U_{ref} subtrahiert. Die Absolutwerte und die Temperaturkoeffizienten der Widerstände R1, R2, R3 und R4 werden durch das ratiometrische Messverfahren eliminiert und brauchen somit keine Präzisionsbauteile zu sein. Die Referenzspannungsquelle bzw. die Referenzspannung U_{ref} wird außer für die Erzeugung des Messstromes Iₘₑₛₛ auch zur Abbildung des analogen Messbereiches auf den Eingangsbereich des A/D-Umsetzers ADC mittels des Differenzverstärkers DV1 verwendet und ist dazu mit dem Operationsverstärker OPV3 verbunden.

Die Operationsverstärker OPV1 und OPV3 können zusätzlich als Filter beschaltet werden, etwa um elektromagnetische Störungen, die auf die Schaltung 2, die Sensoren Rₛ1, Rₛ2 oder Sensorkabel einwirken, zu unterdrücken.

Die Schaltung 2, wie auch andere Ausführungsformen, kann in verschiedenen Integrationsstufen und Bauteilanordnungen realisiert sein. So können der A/D-Umsetzer ADC und eine - relativ ungenaue - Referenzspannungsquelle (nicht gezeigt) zur Erzeugung der Referenzspannung U_{ref}, im Prozessor P integriert sein. Da U_{ref} bei der Verwendung prozessorinterner Referenzen starken Exemplarstreuungen unterliegt, verändert sich entsprechend auch der Messbereich des A/D-Umsetzers ADC in Volt. Da sich bei der Schaltung 2 aber auch der Messstrom Iₘₑₛₛ proportional zu U_{ref} ändert, wird der Ausschlagsbereich von U₁ automatisch an den Messbereich des A/D-Umsetzers ADC angepasst. Somit wird der Messbereich des A/D-Umsetzers ADC immer voll ausgenutzt, und zwar auch bei variabler Referenzspannung U_{ref}, so dass die Auflösung immer optimal ist. Auch können alle Multiplexerkanäle auf einem Chip integriert sein. Die Leckstromdifferenzen der Multiplexerkanäle sind dann in der Regel um ca. einen Faktor 10 geringer als der Absolutwert der Leckströme. Somit ist deren Einfluss sehr gering. Der Impedanzwandler OPV1 kann schon im A/D-Umsetzer ADC enthalten sein.

Die Kalibrierwiderstände R_{ref}1, R_{ref}2 können, wie gezeigt, direkt auf einer Platine L aufgebracht sein, welche auch die Bausteine MUX1, MUX2, OPV1, DV1, ADC, P der Schaltung L2 trägt, insbesondere als oberflächenmontierte SMD-Bauteile. Die Kalibrierwiderstände R_{ref}1, R_{ref}2 können aber auch an anderer Stelle angeordnet sein, z. B. bei einem induktiv gespeisten Kochtopf an der inneren Topfunterseite, falls sich diese weniger erwärmt als die Elektronik. Die Messwiderstände Rs1, Rs2 befinden sich typischerweise nicht auf der Platine, sondern am abzufühlenden Ort.

Der Prozessor (oder eine andere Recheneinheit, z. B. eine Zustandsmaschine) mag auch außerhalb der Messschaltung 2 angeordnet sein, so dass von der Schaltung 2 nur die digitalen Daten D des A/D-Umsetzers ADC übertragen werden.

FIG 2B zeigt eine Auftragung von aus der Schaltung nach FIG 1A oder FIG 2A ermittelten Widerstandswerten in Ohm gegen einen jeweils zugehörigen digitalen Messwert N_{ADC} in Bit. Jedoch wird hier die Auswirkung eines weniger präzisen zweiten Kalibrierwiderstands R_{ref}2 auf die aus den Kalibrierwiderständen R_{ref}1, R_{ref}2 erzeugte Approximationsgerade gezeigt. Während also der auf den Siedepunkt des Wassers bei ca. 100 °C abgestimmte Kalibrierwiderstand R_{ref}1 sehr präzise ist und nur geringe Toleranzen aufweist, ist der zweite Kalibrierwiderstand R_{ref}2 ungenauer (größerer Toleranzbereich und / oder größerer Temperaturkoeffizient und / oder Langzeitstabilität) und damit auch preiswerter. Während die Approximationsgerade G1 bei geringen Toleranzen des Kalibrierwiderstands R_{ref}2 den gesamten Messbereich von -20 °C bis 300 °C sehr genau abdeckt, sind die Abweichungen bei ungenauerem zweitem Kalibrierwiderstand R_{ref}2 um so größer, je weiter entfernt von der Kalibriertemperatur T_{ref}1 gemessen wird. Dadurch können sich im Extremfall die beiden Approximationsgeraden G2 und G3 ergeben. Jedoch wirkt sich eine ungenaue Temperaturbestimmung bei geringen Temperaturen, z. B. zwischen -20 °C bis 50 °C, und bei sehr hohen Temperaturen, z. B. ab 150 °C in der Praxis kaum nachteilig aus, da bei einem Auftauvorgang oder einem Bratvorgang keine sehr genauen Temperaturen eingehalten werden müssen. In dem vorliegenden Ausführungsbeispiel braucht nur die Regelung knapp unterhalb des Siedepunktes von Wasser sehr präzise zu erfolgen.

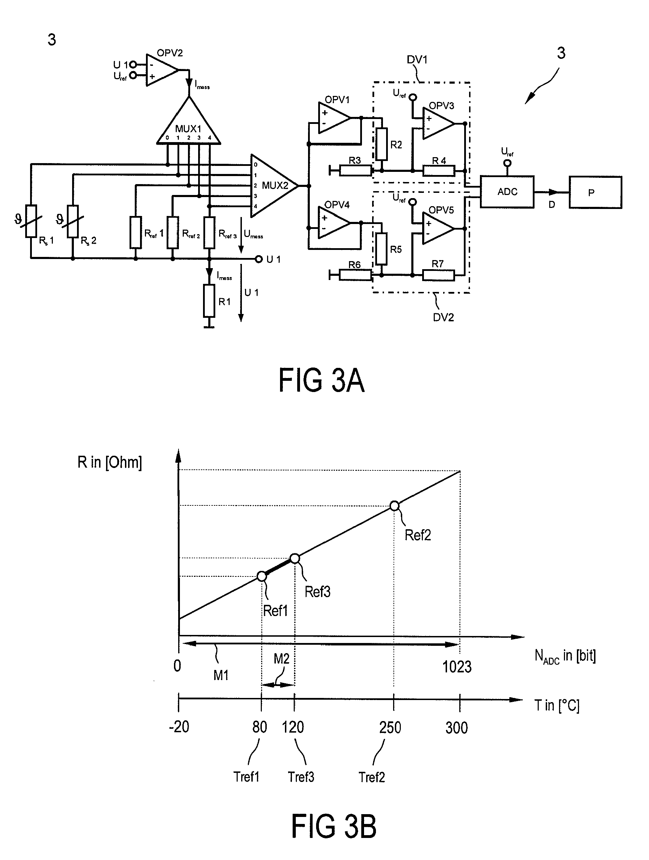

FIG 3A zeigt eine Schaltung 3 zur ratiometrischen Temperaturmessung gemäß noch einem weiteren Ausführungsbeispiel, bei dem nun zwei Messbereiche M1, M2 statt eines einzelnen Messbereichs abgefühlt werden. FIG 3B zeigt eine Auftragung von mittels der Schaltung aus FIG 3A ermittelten Widerstandswerten in Ohm gegen einen jeweils zugehörigen digitalen Wert an einem Ausgang eines Analog/Digital-Wandlers der Schaltung. Die Multiplexer MUX1 und MUX 2 weisen nun jeweils fünf Kanäle [0 ... 4] auf, von denen drei Kanäle [2 ... 4] mit jeweils einem Kalibrierwiderstand R_{ref}1, R_{ref}2, R_{ref}3 verbunden sind. Eine Kalibriertemperatur T_{ref}1 des ersten Kalibrierwiderstands R_{ref}1 beträgt 80 °C, eine Kalibriertemperatur T_{ref}2 des zweiten Kalibrierwiderstands R_{ref}2 beträgt 250 °C und eine Kalibriertemperatur T_{ref}3 des dritten Kalibrierwiderstands R_{ref}3 beträgt 120 °C. Dem zweiten Multiplexer MUX2 nachgeschaltet sind nun zwei parallele Zweige mit jeweils einem Impedanzwandler OPV1 bzw. OPV4 und jeweils einem nachgeschalteten Differenzverstärker DV1 bzw. DV2. Die beiden Zweige OPV1, DV1 bzw. OPV4, DV2 sind unabhängig voneinander einstellbar und sind mit unterschiedlichen Eingängen des A/D-Umsetzers ADC verbunden. Die Schaltung 3 kann die vom zweiten Multiplexer MUX2 ausgegebenen Signale wahlweise über einen der beiden Zweige zum A/D-Umsetzers ADC laufen lassen und so die zwei unabhängig einstellbaren Messbereiche M1, M2 realisieren. Der Prozessor P kann die so erhaltenen digitalen Daten D dem ausgewählten Zweig zuordnen und entsprechend verarbeiten.

Der erste, gröbere Messbereich M1 wird beispielsweise - ähnlich zu den Ausführungsbeispielen aus FIG 1A und FIG 2A - mittels des ersten Kalibrierwiderstands R_{ref}1 und des zweiten Kalibrierwiderstands R_{ref}2 über einen Temperaturbereich von -20 °C bis 300 °C aufgespannt, wozu der erste Differenzverstärker DV1 verwendet wird. Der zweite, feinere Messbereich M2 wird mittels des ersten Kalibrierwiderstands R_{ref}1 und des dritten Kalibrierwiderstands R_{ref}3 über einen Temperaturbereich von 80 °C bis 120 °C aufgespannt, wozu der zweite Differenzverstärker DV2 verwendet wird. Dahinter steht der Gedanke, dass für zwei Messbereiche M1, M2 nicht vier Kalibrierwiderstände verwendet zu werden brauchen, sondern die drei Kalibrierwiderstände R_{ref}1, R_{ref}2, R_{ref}3 ausreichen. So entspricht ein unterer Kalibrierwiderstand R_{ref}1 des feinen Messbereiches M2 dem unteren Kalibrierwiderstand R_{ref}1 des gröberen Messbereichs M1. Alternativ könnte beispielsweise auch der obere Kalibrierwiderstand R_{ref}3 des feinen Messbereiches M2 dem unteren Kalibrierwiderstand R_{ref}1 des gröberen Messbereichs M1 entsprechen. Dadurch kann beispielsweise eine Feinmessung im Bereich von 100 °C zur Bestimmung des Siedepunktes von Wasser in einem eigenen, sehr genauen Messbereich M2 durchgeführt werden. Es ist somit vorteilhaft, einen zweiten Messbereich M2 zu realisieren, der um den Siedepunkt von Wasser herum besonders genau und mit höherer Auflösung misst. Wird der große Messbereich M1 von beispielsweise -20 °C bis 300 °C mit einer Auflösung von z. B. 10 Bit gemessen, beträgt die entsprechende Auflösung der Temperatur 0,29 K. Da ein A/D-Umsetzer ADC meist einen Linearitätsfehler von ein paar Bit (über den gesamten Temperaturbereich) besitzt, kommt so schnell ein Fehler von mehr als 1 K allein aufgrund der Digitalisierung zusammen. Hierzu addiert sich noch der absolute Fehler des Temperatursensors Rₛ1, Rₛ2. Spreizt man nun aber auch den zweiten Messbereich M2 von 80 bis 120 °C mit dem zweiten Differenzverstärker DV2 auf den Eingangsbereich des A/D-Umsetzers ADC von 10 Bit, so ergibt sich hierfür eine Temperaturauflösung von 0,04 K, und ein paar Bit Linearitätsfehler des A/D-Umsetzers ADC ergeben nur einen Fehler in der Größenordnung von Zehntel Kelvin. Dadurch kann im Bereich des Siedepunkts von Wasser genau und mit hoher Auflösung gemessen werden. Die Messung wird vorzugsweise so vorgenommen, dass zunächst im großen Messbereich M1 gemessen wird. Falls nun vom Prozessor P festgestellt wird, dass der Temperaturmesswert innerhalb des feineren Messbereiches M2 liegt, wird eine zweite Messung im feineren Messbereich M2 durchgeführt.

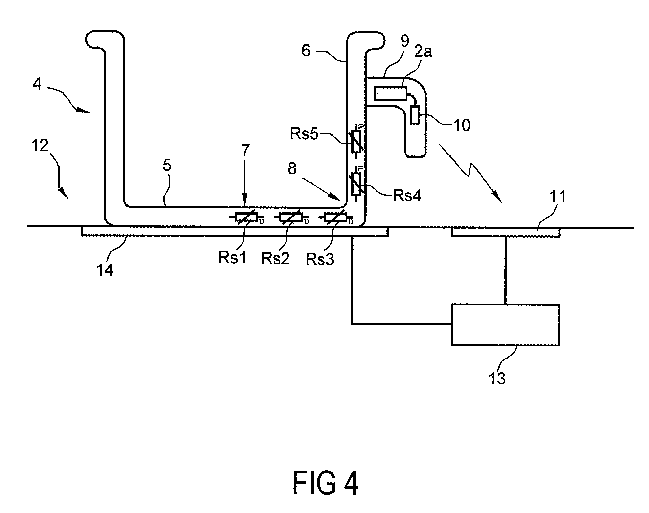

FIG 4 zeigt als Schnittdarstellung in Seitenansicht einen Kochtopf 4 mit Komponenten einer Schaltung 2a zur ratiometrischen Temperaturmessung gemäß einer weiteren Ausführungsform, welche bis auf die Zahl der Widerstandstemperatursensoren Rs1, ..., Rs5 ähnlich zu der Schaltung 2 aus FIG 2A ist. Im Kochtopf 4 sind im Topfboden 5 und der Topfwand 6 untergebracht fünf räumlich verteilte Widerstandstemperatursensoren Rs1, ..., Rs5 in Form von Widerstandstemperatursensoren (z. B. Pt100) gezeigt. Der erste Widerstandstemperatursensor Rs1 ist in der Topfmitte 7 angeordnet, und die anderen Sensoren Rs2, ..., Rs5 sind von dort aus gesehen nach außen gestaffelt angeordnet. Im Einzelnen befinden sich ein zweiter Widerstandstemperatursensor Rs2 zwischen der Mitte 7 und einem Rand 8 des Topfbodens 5, ein dritter Widerstandstemperatursensor Rs3 am Rand 8 des Topfbodens 5 und der vierte Widerstandstemperatursensor Rs4 und darüber der fünfte Widerstandstemperatursensor Rs5 seitlich in der Topfwand 6 in verschiedenen Höhenabständen zum Topfboden 5. Dadurch kann mittels der Widerstandstemperatursensoren Rs1, ..., Rs5 eine Temperaturverteilung eines Garguts im Topf 4 mit hoher Genauigkeit bestimmt werden. Dazu braucht nur ein Messbereich verwendet zu werden, bei dem die Messwerte der Widerstandstemperatursensoren Rs1, ..., Rs5 mittels der gleichen Approximationsgeraden auf einen jeweiligen Temperaturwert abgebildet werden. Es kann aber auch ein zusätzlicher feinerer Messbereich z. B. im Bereich des Siedepunktes von Wasser implementiert sein. Die Widerstandstemperatursensoren Rs1, ..., Rs5 sind mit der restlichen Schaltung 2a, die sich auf einer im Griff 9 untergebrachten Platine L befindet, verbunden. Im Griff herrscht eine geringere Temperatur als im Topfboden 5 oder der Topfwand 6, so dass die Schaltung 2a vor Überhitzung geschützt ist. Alternativ zum Griff kann die Platine auch an einer anderen Position am Topf angeordnet sein, die im Betrieb eine geringere Temperatur aufweist als der Topfboden und somit die elektronische Schaltung vor Überhitzung geschützt ist. Die von der Schaltung 2a ermittelten Temperaturwerte werden über eine Datenübertragungseinheit 10 an eine Datenempfangseinheit 11 eines Kochfelds 12 übertragen, welche die Temperaturdaten an eine Regelungseinheit 13 weiterleitet. In der Regelungseinheit 13 werden die Temperaturdaten zur Temperaturregelung im Kochtopf 4 auf einen vorbestimmten Solltemperaturwert verwendet. Dazu steuert die Regelungseinheit 13 die Leistungszufuhr zu derjenigen Kochzone 14 des Kochfelds 12, welche den Kochtopf 4 bedient. Bei einer Verwendung mehrerer Messbereiche, braucht nur jeweils ein Messwert für jeden der Sensoren Rs2, ..., Rs5 an die Regelungseinheit 13 übermittelt zu werden. Falls der Messwert eines vergleichsweise feinen Messbereichs vorliegt, wird dieser übermittelt. Die Kalibrierwiderstände sind zur besseren Übersichtlichkeit nicht eingezeichnet.

Die Datenübermittlung kann allgemein mittels jedes geeigneten Verfahrens durchgeführt werden, z. B. über Funk oder auf Trägersignale aufmoduliert, z. B. mittels einer Powerlinekommunikationsmethode (PLC; "Power Line Communication"). Insbesondere kann die Datenübertragung über einen Trenntransformator geschehen, bei dem ein Teil des Transformators am Kochfeld 12 angeordnet ist und ein anderer Teil im Kochgeschirr (ohne Abb.). Insbesondere können die in "Inductively Coupled Sensor/Actuator System for Closed-Loop Control Applications at High Temperatures and in Aggressive Environments" beschriebenen Verfahren zur Leistungseinbringung in das Kochgeschirr und zur Signalübertragung verwendet werden.

Optional kann die Temperaturregelung an einen Umgebungsluftdruck angepasst werden. Dazu weisen der Kochtopf 4 oder (bevorzugt) das Kochfeld 12 einen Absolutdrucksensor (o. Abb.) auf, welcher mit der Regelungseinheit 13 funktional verbunden ist, so dass der Sollwert der Regelung druckabhängig variiert werden kann. Die Kalibrierung über den Kalibrierwiderstand bleibt unverändert.

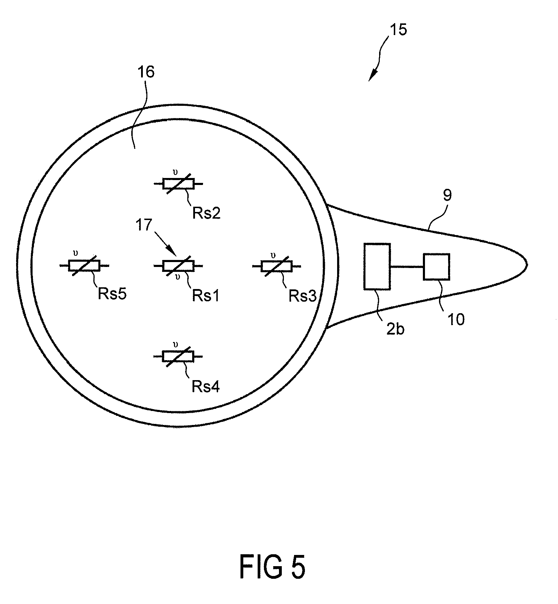

FIG 5 zeigt in Aufsicht eine Skizze einer Bratpfanne 15 mit Komponenten einer Schaltung 2b zur ratiometrischen Temperaturmessung gemäß noch einer weiteren Ausführungsform, welche ebenfalls bis auf die Zahl der Widerstandstemperatursensoren Rs1, ..., Rs5 ähnlich zu der Schaltung 2 aus FIG 2A ist. Im Pfannenboden 16 sind wiederum fünf räumlich verteilte Widerstandstemperatursensoren Rs1, ..., Rs5 in Form von Widerstandstemperatursensoren (z. B. Pt100) angeordnet, allerdings nun winkelsektorförmig oder radialsymmetrisch bezüglich der Bodenmitte 17 angeordnet. Dadurch kann eine räumlich unterschiedliche Verteilung des Garguts erfasst werden, z. B. gefrorene Fischstäbchen nur auf einer Seite der Pfanne. Wie schon in FIG 4 beschrieben, sind auch hier die Widerstandstemperatursensoren Rs1, ..., Rs5 sind mit der restlichen Schaltung 2b, die sich auf einer im Griff 9 untergebrachten Platine L befindet, verbunden. Im Griff 9 herrscht beim Betrieb typischerweise eine geringere Temperatur als im Pfannenboden 16, so dass die Schaltung 2a vor Überhitzung geschützt ist. Die von der Schaltung 2b ermittelten Temperaturwerte werden über eine Datenübertragungseinheit 10 auch hier an eine Datenempfangseinheit und eine Temperaturegelungseinheit übertragen.

Selbstverständlich ist die vorliegende Erfindung nicht auf die gezeigten Ausführungsbeispiele beschränkt.

So brauchen im zweiten, feineren Messbereich M2 die Kalibriertemperatur Tref1 des ersten Kalibrierwiderstands R_{ref}1 und die Kalibriertemperatur Tref3 des dritten Kalibrierwiderstands R_{ref}3 nicht an den Endpunkten des Messbereichs liegen, sondern können, wie auch bei Messbereich M1 innerhalb des Messbereichs liegen, vorzugsweise bei ca. 90 °C und 110 °C.

Alternativ oder zusätzlich zur Bereitstellung von mehren Messbereichen kann durch eine Verwendung von mehr als zwei Kalibrierwiderständen eine Approximation innerhalb eines Messbereichs verfeinert werden.

Allgemein können mehrere Widerstandstemperatursensoren und mehr als zwei Kalibrierwiderstände verwendet werden. Die Breite der Multiplexer wird entsprechend erweitert.

Die Widerstandstemperatursensoren können über eine gemeinsame Rückleitung für den Messstrom Iₘₑₛₛ verfügen, oder jeder Sensor besitzt eine eigene Rückleitung, was zur Abschirmung vorteilhaft sein kann.

Die Stromquelle kann als einzelner integrierter Schaltkreis oder als Operationsverstärkerschaltung, Transistorschaltung oder andere Schaltung ausgeführt sein.

Die Messung des Messstromes Iₘₑₛₛ kann, wie beschrieben, über einen Widerstand am Fusspunkt der Schaltung gegen GND erfolgen, aber auch am Eingang des Multiplexers oder am Ausgang der Stromquelle oder auf sonst geeignete Art.

Auch mag der Prozessor in der Messelektronik nur den Widerstandswert des Temperatursensors ermitteln. Die Bestimmung der Temperatur über eine bekannte Sensorkennlinie kann dann von einem externen Prozessor vorgenommen werden. Dadurch kann der Prozessor auf der Messelektronik mit geringerer Rechenleistung ausgelegt werden.

Zur Steuerung des Messablaufs und ggf. auch zur Approximationsrechnung und / oder zur Temperaturberechnung aus der Sensorkennlinie kann auch eine Logik-Schaltung, wie FPGA, Zustandsmaschine, o. ä. dienen.

Es können auch A/D-Umsetzer mit sehr geringem Eingangsstrom ohne Impedanzwandler verwendet werden.

### Bezugszeichenliste

- 1: Schaltung
- 2: Schaltung
- 2a: Schaltung
- 2b: Schaltung
- 3: Schaltung
- 4: Kochtopf
- 5: Topfboden
- 6: Topfwand
- 7: Mitte des Topfbodens
- 8: Rand des Topfbodens
- 9: Griff
- 10: Datenübertragungseinheit
- 11: Datenempfangseinheit
- 12: Kochfeld
- 13: Regelungseinheit
- 14: Kochzone
- 15: Bratpfanne
- 16: Pfannenboden
- 17: Bodenmitte der Bratpfanne
- ADC: A/D-Umsetzer
- D: digitalisierte Daten
- DV: Differenzverstärker
- G: Approximationsgerade
- Iₘₑₛₛ: Messstrom
- L: Platine
- M: Messbereich
- MUX: Multiplexer
- N_{ADC}: digitalisierter Messwert
- OPV: Operationsverstärker
- P: Prozessor
- R: Widerstand
- Ref: Kalibrierpunkte
- R_{ref}: Kalibrierwiderstand
- Rs: Widerstandstemperatursensor
- Tref: Kalibriertemperatur
- U1: Spannung
- U_{ref}: Referenzspannung
- Uₘₑₛₛ: Messspannung

## Patentansprüche

1. Kochgeschirr (4;15) mit einer Temperaturmessvorrichtung (1;2;3), **dadurch gekennzeichnet, dass** die Temperaturmessvorrichtung eine Schaltung (1;2;2a;2b;3) zur ratiometrischen Temperaturmessung aufweist.

2. Kochgeschirr (4;15) nach Anspruch 1, **dadurch gekennzeichnet, dass** die Schaltung zur ratiometrischen Temperaturmessung mehrere Kalibrierwiderstände (R_{ref}1,R_{ref}2,R_{ref}3) mit jeweiligen Kalibriertemperaturen (Tref1,Tref2,Tref3) aufweist, wobei die Kalibriertemperatur (Tref1, Tref3) mindestens eines ersten Kalibrierwiderstands (R_{ref}1,R_{ref}3) im Bereich zwischen 80 °C und 120 °C liegt.

3. Kochgeschirr (4;15) nach Anspruch 2, **dadurch gekennzeichnet, dass** die Kalibriertemperatur (Tref1) des mindestens einen ersten Kalibrierwiderstands (R_{ref}1) unterhalb der Siedetemperatur von Wasser liegt, insbesondere Bereich zwischen 90 °C und 99 °C.

4. Kochgeschirr (4;15) nach Anspruch 2 oder 3, **dadurch gekennzeichnet, dass** eine Kalibriertemperatur (Tref2) mindestens eines zweiten Kalibrierwiderstands (R_{ref}2) in einem Bereich zwischen 150 °C und 300 °C, insbesondere zwischen 180 °C und 250 °C, liegt.

5. Kochgeschirr (4;15) nach Anspruch 4, **dadurch gekennzeichnet, dass** der zweite Kalibrierwiderstand (R_{ref}2) ungenauer ist als der erste Kalibrierwiderstand (R_{ref}1).

6. Kochgeschirr (4;15) nach einem der vorhergehenden Ansprüche, **dadurch gekennzeichnet, dass** die Schaltung mindestens zwei Messbereiche (M1,M2) aufweist, wobei einer der Messbereiche (M2) zwischen 80 °C und 120 °C liegt.

7. Kochgeschirr (4;15) nach einem der vorhergehenden Ansprüche, **dadurch gekennzeichnet, dass** die Schaltung (3) zur Ausmessung von zwei Messbereichen (M2) drei Kalibrierwiderstände (R_{ref}1,R_{ref}2,R_{ref}3) verwendet.

8. Kochgeschirr (4;15) nach einem der vorhergehenden Ansprüche, **dadurch gekennzeichnet, dass** die Schaltung (2a;2b) mehrere, räumlich verteilte Widerstandstemperatursensoren (Rs1-Rs5) aufweist.

9. Kochgeschirr (4) nach Anspruch 8, **dadurch gekennzeichnet, dass** die Widerstandstemperatursensoren (Rs1-Rs5) von der Bodenmitte (7) aus gesehen nach Außen gestaffelt angeordnet sind.

10. Kochgeschirr (15) nach Anspruch 8 oder 9, **dadurch gekennzeichnet, dass** die Widerstandstemperatursensoren (Rs1-Rs5) winkelsektorförmig angeordnet sind.

11. Verfahren zum Messen einer Temperatur eines Kochgeschirrs, **dadurch gekennzeichnet, dass** bei dem Verfahren eine ratiometrische Temperaturmessung durchgeführt wird.

12. Verfahren nach Anspruch 11 **dadurch gekennzeichnet, dass** zur Durchführung der ratiometrischen Temperaturmessung eine ohmsche Temperaturmessung mit Widerstandstemperatursensoren (Rs1-Rs5) und ohmschen Kalibrierwiderständen (R_{ref}1,R_{ref}2,R_{ref}3) durchgeführt wird.

13. Verfahren nach Anspruch 11 oder 12, **dadurch gekennzeichnet, dass** in mehreren Messbereichen (M1,M2) mit unterschiedlicher Genauigkeit und / oder mit unterschiedlicher Auflösung gemessen wird.

14. Verfahren zum Betreiben eines Kochgeschirrs (4;15) unter Verwendung eines Verfahrens zum Messen einer Temperatur eines Kochgeschirrs (4;15) nach einem der Ansprüche 11 bis 13, **dadurch gekennzeichnet, dass** eine Temperaturregelung auf der Grundlage der ratiometrischen Temperaturmessung durchgeführt wird.

15. Verfahren nach Anspruch 14, **dadurch gekennzeichnet, dass** die Temperaturregelung an einen Umgebungsluftdruck anpassbar ist.
